# EUROPÄISCHE PATENTSCHRIFT

(11) **EP 1 964 756 B1**
(45) Veröffentlichungstag und Bekanntmachung des Hinweises auf die Patenterteilung: **29.04.2009**
(21) Anmeldenummer: 07001546.6
(22) Anmeldetag: 24.01.2007
(51) Int. Cl.: B62D 55/116, E02F 3/26, E21B 7/20

(54) **Pendelfahrwerk, insbesondere für ein Bohrgerät**
Pendulum chassis, in particular for a drill
Mécanisme de roulement oscillant, en particulier pour un outillage d'alésage

(43) Veröffentlichungstag der Anmeldung: 03.09.2008
(73) Patentinhaber: Klemm Bohrtechnik GmbH, 57489 Drolshagen (DE)
(72) Erfinder: Käthner, Ralph, 57462 Olpe (DE); Clemens, Albert, 57482 Wenden (DE)
(74) Vertreter: Wunderlich, Rainer

(56) Entgegenhaltungen:
- EP-A- 0 332 883
- EP-A- 0 367 889
- EP-A- 1 375 926
- EP-A1- 0 985 629
- US-A- 3 061 380
- US-A- 3 459 439
- US-A- 4 046 209
- US-A- 4 284 150
- US-A- 5 806 616

## Beschreibung

Die Erfindung betrifft ein Pendelfahrwerk, insbesondere für ein Bohrgerät, gemäß dem Oberbegriff des Anspruchs 1. Ein solches Pendelfahrwerk weist ein Chassis, zwei Fahrschiffe, die seitlich am Chassis angeordnet und verschwenkbar gelagert sind, zwei Pendelzylinder zum Verschwenken der Fahrschiffe relativ zum Chassis, wobei jedem Fahrschiff ein Pendelzylinder zugeordnet ist, und Hydraulikleitungen auf, die zum Betätigen der Pendelzylinder an den Pendelzylindern angeordnet sind, wobei die Hydraulikleitungen für ein gegensinniges Verschwenken der Fahrschiffe miteinander verbunden sind, wobei an zumindest einer Hydraulikleitung für jeden Pendelzylinder eine Sicherungseinrichtung zur Leitungsbruchsicherung vorgesehen ist, wobei jede Sicherungseinrichtung zumindest ein fernbetätigbares Absperrventil zum Absperren der jeweiligen Hydraulikleitung bei einem Leitungsbruch aufweist, und wobei eine Fernbetätigungseinrichtung zum gleichzeitigen Öffnen der Absperrventile bei Normalbetrieb vorgesehen ist.

Bohrgeräte für den Spezialtiefbau, Steinbruch und/oder Bergbau müssen häufig in unebenem Terrain und/oder auf wenig tragfähigem Baugrund eingesetzt werden. Zur Verbesserung der Geländegängigkeit und Steigfähigkeit sind diese Bohrgeräte zumeist mit Raupenkettenfahrwerken ausgerüstet.

Zur weiteren Verbesserung der Geländegängigkeit und/oder zur Verringerung von punktuell hohen Flächenpressungen und damit zur Verringerung des Grundbruchrisikos sind Fahrwerke bekannt, bei denen die beiden Fahrschiffe mit den Raupenketten nicht starr miteinander verbunden sind, sondern unabhängig voneinander um eine horizontal und quer zur Fahrtrichtung der Fahrschiffe verlaufende Achse eine Nickbewegung ausführen können. Dabei sind die Fahrschiffe um die Achse schwenkbar am Chassis gelagert und besitzen in einer gewissen Entfernung zur Achse jeweils einen Anlenkpunkt für einen Hydraulikzylinder, wobei der Zylinder auf seiner dem Fahrschiff abgewandten Seite wiederum am Chassis angelenkt ist. Bei einer derartigen Anordnung werden die Betriebskräfte und -momente vom Chassis in Form eines Kräftepaares auf die Fahrschiffe übertragen. Durch Verlängern und Verkürzen eines Hydraulikzylinders kann das jeweilige Fahrschiff in unterschiedliche Winkelstellungen zum Chassis gebracht werden.

Die durch Verschwenken der Fahrschiffe gegebene Nickbewegung wird vielfach mit dem Begriff "Pendeln" bezeichnet. Demgemäß werden das entsprechende Fahrwerk als Pendelfahrwerk, die Achse, um welche eine Verschwenkung gegeben ist, als Pendelachse, und die zum Erzeugen der Bewegung vorgesehenen Hydraulikzylinder als Pendelzylinder bezeichnet.

Ein Raupenbohrwagen mit einem Pendelfahrwerk ist beispielsweise aus der EP 0 332 883 A1 bekannt.

Die beiden Pendelzylinder sind in der Regel so miteinander verschaltet, dass sowohl die beiden Kolbenbodenkammern als auch die beiden Ringflächenkammern der beiden Pendelzylinder jeweils hydraulisch miteinander verbunden sind. Treten bei einer derartigen Anordnung beim Verfahren im unebenen Gelände unterschiedliche Flächenpressungen an den Fahrschiffen auf, so erfolgt unter Bewegung der Fahrschiffe ein selbsttätiger Druckausgleich in den jeweils miteinander kommunizierenden Zylinderkammern. Die hieraus resultierende gegengerichtete Bewegung wird als "passives" Pendeln oder "Pendelautomatik" bezeichnet.

Zur Erweiterung der Funktionalität des Pendelfahrwerks kann eine Fördereinrichtung vorgesehen sein, mit der zwei miteinander verbundenen Kammern gleichzeitig von außen Öl zugeführt werden kann, während aus den gegenüber liegenden Kammern Öl abgeführt wird. Sofern beiderseits der Zylinderkolben unterschiedlich große Kolbenflächen gegeben sind, wird dem System hierbei insgesamt Öl zugeführt beziehungsweise Öl aus dem System abgeführt. Die hierbei ausgeführte Fahrgestellbewegung wird als "aktives" Pendeln bezeichnet. Beim aktiven Pendeln werden die Pendelzylinder gleichgerichtet betrieben, so dass das Chassis gegenüber beiden Fahrschiffen abgesenkt oder angehoben werden kann. Dies kann insbesondere bei Verladevorgängen und/oder beim Befahren von steilen Baustellenrampen vorteilhaft sein.

Kommt es bei einem Pendelfahrwerk ausnahmsweise zu einer Beschädigung an den Hydraulikleitungen, beispielsweise aufgrund einer externen Einwirkung beim rauen Bohrbetrieb, so kann eine schlagartige Entleerung der Pendelzylinder eintreten, verbunden mit einem schlagartigen Abkippen des gesamten Chassis, gegebenenfalls mitsamt einem hieran angeordneten Bohrmast. Aufgrund des damit einhergehenden Gefährdungspotenzials ist ein solcher Zustand zu vermeiden.

Es ist bekannt, in den Zuleitungen der Pendelzylinder Kugelhähne einzusetzen. Diese Hähne können jedoch während des Fahrens im Falle eines Leitungsbruches in der Regel nicht hinreichend rasch geschlossen werden und können somit nicht zur Leitungsbruchsicherung dienen.

Ferner sind so genannte Schlauch- oder Rohrbruchsicherungen bekannt, die strömungsangeregt bei einer kritischen Durchflussmenge einsetzen. Solche Sicherungen arbeiten jedoch vergleichsweise viskositätsabhängig, das heißt temperaturabhängig, und können unter bestimmten Umständen erst mit einer nicht tolerierbaren Verzögerung schalten, so dass diese Sicherungen zum Sichern eines Pendelfahrwerkes gegen Leitungsbruch allenfalls bedingt einsetzbar sind.

Beim Verfahren eines Pendelfahrwerkes im Gelände kann darüber hinaus im Ausnahmefall einer übermäßig außermittigen Schwerpunktslage des Bohrgerätes, z.B. aufgrund eines stark außermittig eingestellten Bohrmastes, die passive Pendelbewegung zu einer noch ungünstigeren Schwerpunktsverlagerung führen, welche wiederum die Flächenpressung erhöhen und den Pendelvorgang beschleunigen kann. Das System kann somit im Ausnahmefall instabil werden, was im Extremfall zu einem Umstürzen des Gerätes führen könnte.

Es ist bekannt, in den Anschlussleitungen für die Pendelzylinder entsperrbare Rückschlagventile vorzusehen, die beim Verfahren des Bohrgerätes automatisch mit einem Druck beaufschlagt werden, der die Entsperrung aufhebt und ein Pendeln der Fahrschiffe zulässt. Bei stillstehendem Gerät ist das Pendeln dabei unterbunden. Ein Umstürzen während des Verfahrens kann mit solch einem Gerät jedoch nicht ohne weiteres unterbunden werden.

Die US 5,806,616 beschreibt eine gattungsgemäße Vorrichtung zum Kontrollieren der Schwingungsbewegung einer Gesteinsbohreinrichtung. Die Vorrichtung weist zwei Zylinder auf, die zwischen einem Chassis und zwei Raupen wirken. An den Zylindern sind Ventile vorgesehen, welche das Ausströmen von Druckflüssigkeit aus den Zylindern im Falle einer Schlauchbeschädigung verhindern und dabei die Raupen und das Chassis im Hinblick auf eine Relativbewegung verriegeln.

Die US 4,284,150 beschreibt eine hydraulisch betätigte Probennehmereinrichtung, die elektrisch ferngesteuerte Ventile aufweist.

**Aufgabe** der Erfindung ist es, ein Pendelfahrwerk anzugeben, das bei besonders hoher Wirtschaftlichkeit und Zuverlässigkeit insbesondere eine besonders hohe Betriebssicherheit aufweist.

Die Aufgabe wir erfindungsgemäß durch ein Pendelfahrwerk mit den Merkmalen des Anspruchs 1 gelöst. Bevorzugte Ausführungsbeispiele sind in den abhängigen Ansprüchen angegeben.

Beim erfindungsgemäßen Pendelfahrwerk ist vorgesehen, dass an zumindest einer Hydraulikleitung für jeden Pendelzylinder eine Sicherungseinrichtung zur Leitungsbruchsicherung vorgesehen ist, wobei jede Sicherungseinrichtung zumindest ein fernbetätigbares Absperrventil zum Absperren der jeweiligen Hydraulikleitung bei einem Leitungsbruch aufweist, und dass eine Fernbetätigungseinrichtung zum gleichzeitigen Öffnen der Absperrventile bei Normalbetrieb vorgesehen ist.

Ein Grundgedanke der Erfindung kann darin gesehen werden, an den Hydraulikleitungen im Bereich der beiden Hydraulikzylinder jeweils zumindest ein Absperrventil anzuordnen. Mittels dieser Absperrventile kann die jeweilige Hydraulikleitung im Falle eines Leitungsbruches geschlossen werden und somit verhindert werden, dass sich der zugeordnete Pendelzylinder über die gebrochene Hydraulikleitung schlagartig entleert. Ferner kann durch Schließen der Absperrventile eine übermäßige und/oder instabile Pendelbewegung des Fahrwerkes unterbunden werden. Der Gefahr eines Umstürzens des Fahrwerkes kann somit effizient entgegengewirkt werden.

Die Absperrventile sind erfindungsgemäß mittels einer Fernbetätigungseinrichtung betätigbar. Dies ermöglicht es, die Ventile im Gefahrenfalle besonders rasch abzusperren, so dass einer unkontrollierten Pendelbewegung schon frühzeitig entgegengewirkt werden kann und somit die Betriebssicherheit weiter erhöht ist. Die Fernbetätigungseinrichtung ist dabei zum gleichzeitigen Öffnen der Absperrventile beim Normalbetrieb, wenn also insbesondere weder ein Leitungsbruch noch eine instabile Pendelbewegung vorliegt, vorgesehen. Dies ermöglicht einen besonders wirtschaftlichen Betrieb, da die gegebenenfalls an unzugänglichen Bereichen angeordneten Absperrventile im täglichen Normalbetrieb einfach und schnell geöffnet werden können. Die Fernbetätigungseinrichtung kann grundsätzlich dafür vorgesehen sein, die Absperrventile individuell abzusperren. Ein besonders zuverlässiger Betrieb ist jedoch dadurch gegeben, dass die Fernbetätigungseinrichtung zum gleichzeitigen Schließen aller Absperrventile im Störfall, insbesondere bei Leitungsbruch, vorgesehen ist. Bei einer solchen Anordnung kann das Pendelfahrwerk auch dann sicher festgelegt werden, wenn die Ursache der Störung zunächst noch unbekannt ist. Durch die erfindungsgemäßen Sicherungseinrichtungen werden besonders zuverlässige Lasthaltemittel für die Pendelzylinder geschaffen, die geeigneterweise in der unmittelbaren Nähe der Pendelzylinder angeordnet sind.

Das erfindungsgemäße Fahrwerk ist bevorzugt für ein Bohrgerät vorgesehen. In diesem Falle kann am Chassis, das auch als Oberwagen bezeichnet werden kann, ein Bohrmastelement angeordnet sein, an dem insbesondere ein Bohrwerkzeug vorgesehen ist. Bei dem erfindungsgemäßen Fahrwerk kann es sich insbesondere um ein Raupenfahrwerk handeln, wobei dann an jedem Fahrschiff zumindest eine Raupenkette angeordnet ist.

Beim Pendeln tritt in der Regel eine Bewegung der beiden Pendelzylinder relativ zueinander und/oder relativ zum Chassis auf. Insbesondere um auch bei einer solchen Bewegung eine einfache und zuverlässige Verbindung zwischen den beiden Pendelzylindem zu erhalten, ist es vorteilhaft, dass zumindest eine der Hydraulikleitungen einen flexiblen Schlauchabschnitt aufweist.

Eine besonders einfache Konstruktion ist dadurch gegeben, dass alle zum Betätigen der Pendelzylinder vorgesehenen Hydraulikleitungen bereichsweise fest am Chassis verlaufen, wo insbesondere eine Hydraulikfluidversorgung und/oder weitere hydraulische Betriebsmittel vorgesehen sein können. In diesem Fall ist es zweckmäßig, dass die flexiblen Schlauchabschnitte zwischen den am Chassis verlaufenden Leitungsabschnitten und den jeweiligen Pendelzylindern vorgesehen sind.

Sofern eine Hydraulikleitung eines Pendelzylinders einen Schlauchabschnitt aufweist, ist es erfindungsgemäß besonders vorteilhaft, dass die Sicherungseinrichtung zwischen dem jeweiligen Pendelzylinder und dem Schlauchabschnitt angeordnet ist. Bei dieser Ausführungsform wird berücksichtigt, dass Schlauchabschnitte vergleichsweise leicht beschädigt werden können, beispielsweise durch Quetschung, Scherung und/oder durch altersbedingte Porosität, so dass die Gefahr eines Leitungsbruches an den Schlauchabschnitten vergleichsweise hoch ist. Durch die Anordnung der Sicherungseinrichtung zwischen dem Schlauchabschnitt und dem Pendelzylinder kann der Schlauchbereich mit vergleichsweise hohem Bruchsrisiko im Bruchfall einfach und zuverlässig vom Pendelzylinder getrennt werden.

Der Hydraulikleitungsbereich zwischen den Pendelzylindern und der jeweils im Leitungsverlauf nächstliegenden Sicherungseinrichtung ist vorzugsweise fest, das heißt unbeweglich, und/oder verrohrt ausgebildet, da dieser Bereich im Bruchfalle in der Regel nicht durch die Sicherungseinrichtung abgesperrt werden kann. Durch die unbewegliche, verrohrte Ausführung ist jedoch eine besonders hohe passive Bruchsicherheit gegeben. Zur weiteren Erhöhung der Betriebssicherheit sind die hydraulischen Bauteile einer Sicherungseinrichtung geeigneterweise fest miteinander verbunden.

Die Betriebssicherheit kann weiter dadurch erhöht werden, dass die Fernbetätigungseinrichtung einen Taster, insbesondere einen Fußtaster aufweist, wobei die Fernbetätigungseinrichtung vorzugsweise so ausgebildet ist, dass die Absperrventile bei freigegebenem Taster schließen. Im Leitungsbruchsfall ist somit nur dann eine Zylinderbewegung möglich, solange der Taster betätigt ist. Eine solche Ausführung der Fernbetätigungseinrichtung berücksichtigt, dass es im Notfall, insbesondere bei kippendem Fahrgestell, in der Regel dem Instinkt entspricht, vom Fahrgestell und somit von Bedienelementen zurückzuweichen und damit den Taster freizugeben. Gemäß der vorteilhaften Ausführungsform werden bei einem solchen Freigeben alle Absperrventile automatisch geschlossen und somit die Zylinder abgesperrt, so dass die unerwünschte Pendelbewegung stillgesetzt ist. Weiter kann die Fernbetätigungseinrichtung so ausgebildet sein, dass die Absperrventile bei gedrücktem Taster öffnen.

Zweckmäßigerweise ist der Taster am Fahrerstand angeordnet. Die Fernbetätigungseinrichtung steht mit den Absperrventilen elektronisch in Signalverbindung.

Im Hinblick auf die Betriebssicherheit ist es weiterhin vorteilhaft, dass das Absperrventil so ausgeführt ist, dass es im signalfreien Zustand geschlossen ist. Bei dieser Ausführungsform ist eine Fail-Safe-Funktion gegeben, die sicherstellen kann, dass das Pendeln des Fahrwerkes bei einem ungeplanten Energieausfall gesperrt wird und somit kein kritischer Pendelzustand eingenommen werden kann.

Die Betriebssicherheit im Hinblick auf einen eventuellen Leitungsbruch kann nach der Erfindung weiterhin dadurch erhöht werden, dass zumindest eine der Sicherungseinrichtungen eine Drosseleinrichtung aufweist, die zum Begrenzen einer Hydraulikfluidströmung aus dem jeweiligen Pendelzylinder an der jeweiligen Hydraulkleitung angeordnet ist. Geeigneterweise weist jede der Sicherungseinrichtungen eine solche Drosseleinrichtung auf, die insbesondere als Stromregelventil ausgebildet sein kann. Durch eine solche Drosseleinrichtung kann die maximale Aus- und/oder Einfahrgeschwindigkeit der Kolbenstange des Pendelzylinders begrenzt und insbesondere eingestellt werden. Insbesondere kann mittels einer Drosseleinrichtung verhindert werden, dass im Falle eines Leitungsbruches bei äußerer Krafteinwirkung die betroffene Zylinderkammer schlagartig geleert wird und somit möglicherweise nicht hinreichend Zeit zum Sperren der Absperrventile zur Verfügung steht.

Das Stromregelventil, das in bevorzugter Weise die Drosseleinrichtung bildet, kann insbesondere für eine Abstromregelung eingerichtet sein, aufgrund derer das Hydrauliköl unabhängig von Viskosität und äußerer Last abströmt. Hierdurch ist mit dem erfindungsgemäßen Pendelfahrwerk ein sicherer Betrieb weitestgehend unabhängig von der Viskosität, das heißt der Betriebstemperatur, des Hydrauliköles gegeben. Insbesondere kann hierdurch eine geringere Viskositäts- beziehungsweise Temperaturabhängigkeit gegeben sein als bei den sogenannten Schlauch- oder Rohrbruchsicherungen, die strömungsangeregt erst ab einer kritischen Durchflussmenge einsetzen.

An der Drosseleinrichtung kann eine Bypassleitung mit einem Rückschlagventil vorgesehen sein, das insbesondere einen zum jeweiligen Pendelzylinder hin gerichteten Hydraulikfluidstrom passieren lässt. Hierdurch kann beispielsweise der Energieaufwand beim aktiven Pendeln verringert werden, da das zusätzlich zugeführte Hydraulikfluid beim aktiven Pendeln über die Bypassleitung die Drosseleinrichtung umgehen kann.

Weiterhin ist es nach der Erfindung vorteilhaft, dass zumindest eine der Sicherungseinrichtung zum Überlastschutz des jeweiligen Pendelzylinders ein Druckbegrenzungsventil aufweist, das an einer Überlastleitung angeordnet ist, die von der jeweiligen Hydraulikleitung abzweigt. Hierdurch können der Zylinder vor Überlast durch von außen wirkende Kräfte geschützt werden und somit mechanische Beschädigungen verhindert werden. Der am Druckbegrenzungsventil vorzugsweise fest eingestellte Druck kann insbesondere über dem maximal zulässigen Betriebsdruck des Zylinders liegen und vorzugsweise etwa das 1,3-fache des maximalen Betriebsdruckes betragen.

Für einen besonders zuverlässigen Pendelbetrieb ist es nach der Erfindung vorteilhaft, dass die Pendelzylinder als doppeltwirkende Zylinder ausgebildet sind, an denen jeweils zwei Hydraulikleitungen angeordnet sind. Zweckmäßigerweise sind die Hydraulikleitungen für ein gegensinniges Verschwenken der Fahrschiffe paarweise miteinander verbunden. Insbesondere sind jeweils gleichgerichtete Kammern der beiden Zylinder über die Hydraulikleitungen miteinander verbunden. Eine konstruktiv besonders einfache und wirtschaftliche Anordnung ist dadurch gegeben, dass es sich bei den Pendelzylindern um Differenzialzylinder handelt.

Sofern die Pendelzylinder doppeltwirkend mit jeweils zwei Hydraulikleitungen ausgebildet sind, ist für eine besonders hohe Betriebssicherheit bevorzugt an jeder der beiden Hydraulikleitungen pro Zylinder eine Sicherungseinrichtung vorgesehen, so dass pro Zylinder zwei, insgesamt vier Sicherungseinrichtungen gegeben sind. Für eine besonders wirtschaftliche Vorrichtung kann jedoch auch vorgesehen sein, lediglich an einer der beiden Leitungen jedes doppeltwirkenden Zylinders eine Sicherungseinrichtung vorzusehen, und zwar insbesondere an der Leitung, welche der hauptsächlich belasteten Zylinderseite zugeordnet ist. Hierbei kann es sich um die Zylinderseite handeln, die durch die Gewichtskraft des Chassis auf Druck belastet ist. Bei einer solchen Ausführungsform wird nur die halbe Zahl von Sicherungseinrichtungen, insgesamt zwei, benötigt.

Für ein besonders gut handhabbares und vielseitig einsetzbares Fahrwerk ist es nach der Erfindung vorteilhaft, dass eine Fördereinrichtung vorgesehen ist, die mit den Hydraulikleitungen in Verbindung steht, und mit der zum gleichsinnigen Verschwenken der Fahrschiffe Hydraulikfluid zu den Pendelzylindern zuführbar und/oder von diesen abführbar ist. Hierdurch kann eine aktive Pendelfunktion realisiert werden. Geeigneterweise weist die Fördereinrichtung eine Hydropumpe auf, mit der über ein 4/3-Wegeventil wechselseitig Fluid entweder in beide Ringflächenkammern oder in beide Kolbenflächenkammern der beiden Pendelzylinder zuführbar ist, wobei über das Wegeventil gleichzeitig Fluid aus den beiden entgegen gerichteten Kammern in einen Abführbereich der Fördereinrichtung abführbar ist.

Sofern eine Fördereinrichtung vorgesehen ist, ist es für einen besonders zuverlässigen Betrieb vorteilhaft, dass eine Lasthalteeinrichtung zum Trennen einer Fluidverbindung zwischen der Fördereinrichtung und den Hydraulikleitungen vorgesehen ist. Die Lasthalteeinrichtung, die bevorzugt zumindest ein Lasthalteventil aufweist, ermöglicht es, die Pendelzylinder von der für das aktive Pendeln erforderlichen Ölversorgung abzusperren. Da beim aktiven Pendeln die beiden Pendelzylinder stets gleichzeitig beaufschlagt werden und in gleicher Weise ansprechen sollen, sind zum Verbinden der Fördereinrichtung mit den Hydraulikleitungen der Pendelzylinder lediglich zwei Betriebsleitungen erforderlich, von denen je nach Ventilstellung des Wegeventils die eine als Zuführleitung und die andere als Abführleitung dient. Da lediglich zwei Betriebsleitungen erforderlich sind, sind für einen zuverlässigen Betrieb der Lasthalteeinrichtung insgesamt lediglich zwei Lasthalteventile erforderlich.

Da nach der Erfindung nicht nur eine einzige zentrale Lasthalteeinrichtung vorgesehen ist sondern mit den Sicherungseinrichtungen eine Vielzahl von zusätzlichen Mitteln bereitgestellt sind, die zum Lasthalten dienen können, und die insbesondere in der unmittelbaren Nähe der Pendelzylinder angeordnet werden können, ist erfindungsgemäß eine besonders hohe Betriebssicherheit gegeben. Unter einem Absperrventil kann nach der Erfindung insbesondere ein Ventil verstanden werden mit dem die jeweilige Leitung für beide Strömungsrichtungen absperrbar ist. Grundsätzlich könnte auch ein einseitig sperrendes Ventil ausreichend sein.

Die Fördereinrichtung und/oder die Lasthalteeinrichtung können insbesondere fest am Chassis vorgesehen sein. Insbesondere können nach der Erfindung bei weiterhin hoher Betriebssicherheit zwischen der Lasthalteeinrichtung und den Pendelzylindern flexible Schlauchabschnitte vorgesehen werden, da einem unkontrollierten Abströmen von Fluid erfindungsgemäß nicht nur über die Lasthalteeinrichtung sondern auch über die zylindernah angeordneten Sicherungseinrichtungen entgegengewirkt werden kann.

Im Hinblick auf die Betriebssicherheit ist es darüber hinaus vorteilhaft, dass die Sicherungseinrichtungen am jeweiligen Pendelzylinder insbesondere fest angeordnet sind. Beispielsweise können die Sicherungseinrichtungen an einem Zylindergehäuse des jeweiligen Pendelzylinders vorgesehen sein. Durch eine Anordnung der Sicherungseinrichtungen unmittelbar am jeweiligen Pendelzylinder können die in der Regel ungesicherten Leitungsbereiche zwischen Sicherungseinrichtung und Pendelzylinder kurz gehalten werden. Die Sicherungseinrichtungen können insbesondere an den Zylinderanschlüssen der jeweiligen Pendelzylinder fest angeordnet sein, wodurch sich besonders kurze ungesicherte Leitungsabschnitte ergeben.

Ferner ist es nach der Erfindung vorteilhaft, dass die Sicherungseinrichtungen jeweils ein Gehäuse aufweisen, in dem das Absperrventil, gegebenenfalls das Druckbegrenzungsventil und/oder gegebenenfalls die Drosseleinrichtung angeordnet sind. Indem alle sicherheitsrelevanten Hydraulikelemente jeder Sicherungseinrichtung jeweils in einem gemeinsamen Gehäuse untergebracht sind, wird die Störungsanfälligkeit reduziert und die Betriebssicherheit somit weiter erhöht. Sofern an einem Zylinder mehrere Sicherungseinrichtungen angeordnet sind, können diese getrennte Gehäuse aufweisen. Für eine besonders kompakte Bauform können die beiden Sicherungseinrichtungen eines Zylinders aber auch ein gemeinsames Gehäuse aufweisen, das insbesondere mit den Zylinderanschlüssen fest verbunden sein kann.

Eine erfindungsgemäße Baumaschine ist dadurch gekennzeichnet, dass ein Fahrwerk nach einem der vorstehenden Ansprüche vorgesehen ist. Hierdurch können die im Zusammenhang mit dem Fahrwerk erläuterten Vorteile bei einer Baumaschine realisiert werden. Bei der Baumaschine kann es sich insbesondere um ein Erdbohrgerät handeln.

Die Erfindung wird nachfolgend anhand bevorzugter Ausführungsbeispiele näher erläutert, die schematisch in den Zeichnungen dargestellt sind. In den Zeichnungen zeigen.
- Fig. 1: den Hydraulikplan einer Pendeleinrichtung eines erfindungsgemäßen Pendelfahrwerks;
- Fig. 2: ein Bohrgerät mit einem erfindungsgemäßen Pendelfahrwerk mit der Pendeleinrichtung aus Fig. 1;
- Fig. 3: das Bohrgerät aus Fig. 2 beim aktiven Pendeln; und
- Fig. 4: das Bohrgerät aus Fig. 2 beim passiven Pendeln.

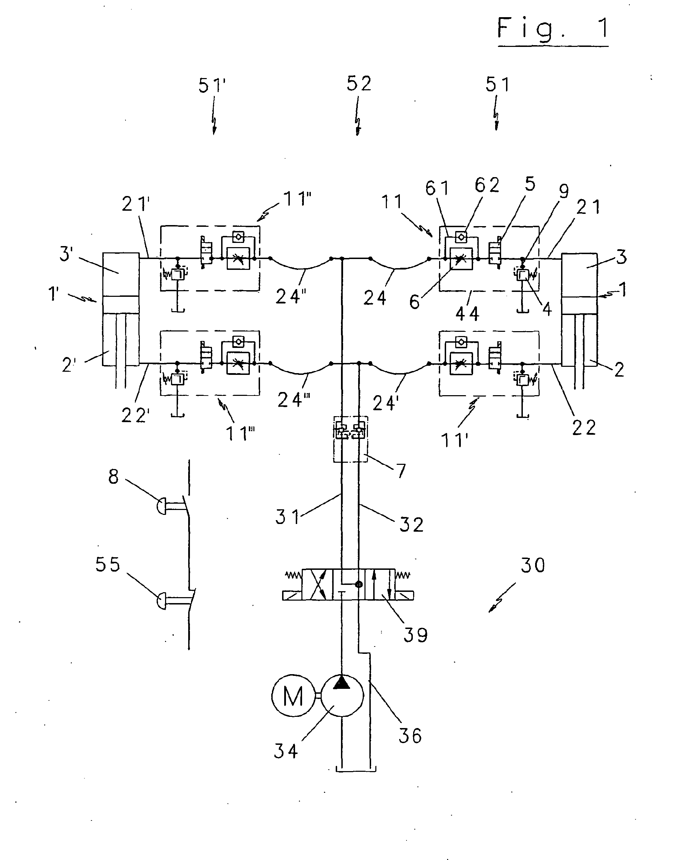

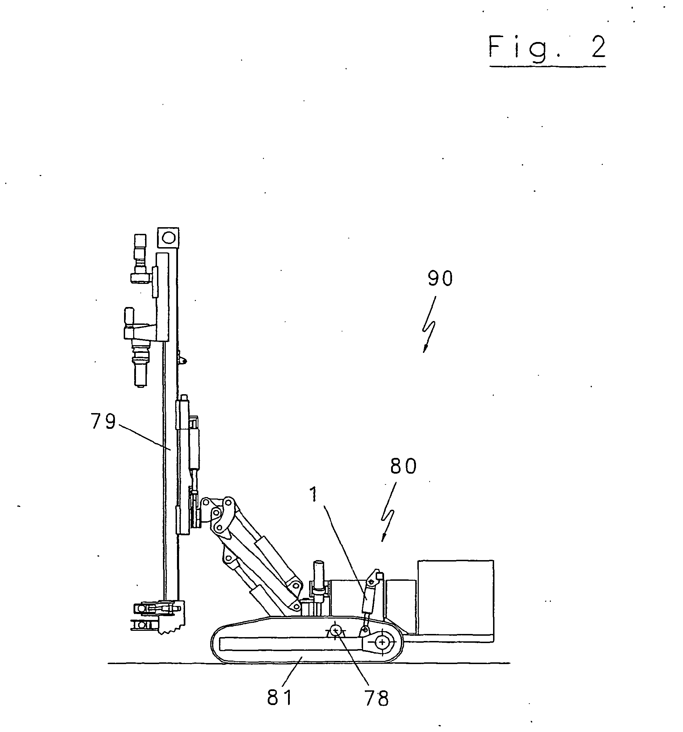

Eine Pendeleinrichtung für ein erfindungsgemäßes Pendelfahrwerk ist in Fig. 1 dargestellt. Die Pendeleinrichtung weist zwei Pendelzylinder 1, 1' auf, die zum Verschwenken von in den Figuren 2 bis 4 dargestellten Fahrschiffen 81 beziehungsweise 81' dienen. Die beiden Pendelzylinder 1, 1' sind als doppeltwirkende Differenzialzylinder ausgebildet. An ihnen ist jeweils eine erste Hydraulikleitung 21 beziehungsweise 21' angeordnet, die mit der jeweiligen Kolbenbodenkammer 3 beziehungsweise 3' der Zylinder 1, 1' in Verbindung steht. Ferner ist an den Pendelzylindern 1 und 1' jeweils eine zweite Hydraulikleitung 22 beziehungsweise 22' angeordnet, die mit der jeweiligen Ringflächenkammer 2 beziehungsweise 2' der Zylinder 1, 1' in Verbindung steht. Die beiden ersten Hydraulikleitungen 21 und 21' der Kolbenbodenkammern 3, 3' sind miteinander verbunden. Ebenso sind die beiden zweiten Leitungen 22 und 22' der Ringflächenkammern 2, 2' miteinander verbunden. Dies ermöglicht eine passive gegensinnige Pendelbewegung der beiden Pendelzylinder 1, 1' derart, dass ein Einfahren eines der beiden Pendelzylinder 1, 1' um eine Wegstrecke zu einem Ausfahren des zweiten Pendelzylinders 1' beziehungsweise 1 um die gleiche Wegstrecke führt.

Die vier Hydraulikleitungen 21, 22, 21', 22' weisen jeweils einen flexiblen Schlauchabschnitt 24, 24', 24" beziehungsweise 24'" auf. Diese flexiblen Schlauchabschnitte 24, 24', 24", 24'" können zur Kompensation von Bewegungen der Pendelzylinder 1, 1' dienen, die beim Pendelbetrieb auftreten. Sie können insbesondere zur Kompensation von Relativbewegungen zwischen fest mit den Pendelzylindern 1, 1' verbundenen Hydraulikleitungsbereichen 51, 51' bezüglich fest mit einem Chassis 80 verbundenen Leitungsbereichen 52 dienen.

Zur Schlauchbruchsicherung ist an den Hydraulikleitungen 21, 22, 21', 22' jeweils eine

Sicherungseinrichtung 11, 11', 11 ", 11 "'.vorgesehen. Der Übersichtlichkeit halber sind lediglich die Komponenten der an der Hydraulikleitung 21 vorgesehenen Sicherungseinrichtung 11 mit Bezugszeichen gekennzeichnet. Die drei verbleibenden Sicherungseinrichtungen 11', 11 ", 11"' sind analog aufgebaut.

Die Sicherungseinrichtungen 11, 11"; 11', 11"', die auch als Sicherungsventilkombinationen bezeichnet werden können, sind kolbenbodenseitig beziehungsweise kolbenstangenseitig fest am jeweiligen Pendelzylinder 1, 1' angeflanscht. Sie sind dabei im Leitungsverlauf der jeweiligen Hydraulikleitungen 21, 22, 21', 22' zwischen den Pendelzylindern 1, 1' und dem jeweils nächstgelegenen flexiblen Schlauchabschnitt 24, 24', 24", 24"' angeordnet.

Die Sicherungseinrichtungen 11, 11', 11 ", 11"' weisen jeweils ein Absperrventil 5 auf, das im Falle eines Brechens des nächstgelegenen flexiblen Schlauchabschnittes 24, 24', 24", 24''' geschlossen werden kann, wodurch verhindert werden kann, dass die zugeordnete Kammer 3, 2, 3' beziehungsweise 2' durch den gebrochenen Schlauchabschnitt 24, 24', 24", 24"'ungewollt entleert wird. Diese Absperrventile 5 sind im signalfreien Zustand stets gesperrt. Sie können gemeinsam elektrisch durch Drücken eines Tasters 8 entsperrt werden, der von den Sicherungseinrichtungen 11, 11', 11'', 11''' beabstandet beispielsweise an einem Fahrerstand vorgesehen ist.

Im Ausführungsbeispiel der Fig. 1 ist zusätzlich zum Taster 8 ein Notaus-Schalter 55 vorgesehen. Bei Betätigen des Notaus-Schalters 55 wird die Leitungsverbindung zwischen dem Taster 8 und den Absperrventilen 5 getrennt, so dass die Absperrventile 5 auch bei einer gedrückten Position des Tasters 8 signalfrei sind und somit sperren.

Die Sicherungseinrichtungen 11, 11', 11 ", 11"' weisen ferner jeweils eine Überlastleitung 9 auf, die von der jeweiligen Hydraulikleitung 21, 22, 21', 22' abzweigt. An diesen Überlastleitungen 9 ist jeweils ein Druckbegrenzungsventil 4 angeordnet, das beim Überschreiten eines vorgegebenen Hydraulikdruckes öffnet, so dass Hydraulikfluid aus den entsprechenden Zylinderkammern 3, 2, 3', 2' abfließen kann. Hierdurch werden die Pendelzylinder 1, 1' vor Überlast durch von außen wirkende Kräfte geschützt. Um einen Überlastschutz auch bei gesperrtem Absperrventil 5 zu erlauben, zweigt die Überlastleitung 9 jeweils zwischen dem Absperrventil 5 und dem nächstgelegenen Pendelzylinder 1, 1' von der jeweiligen Hydraulikleitung 21,22, 21', 22' ab.

Auf der zylinderabgewandten Leitungsseite des Absperrventils 5 weisen die Sicherungseinrichtungen 11, 11', 11", 11"' ferner jeweils ein Stromregelventil 6 auf. Dieses Stromregelventil 6 ermöglicht es, die maximale Strömungsgeschwindigkeit aus der jeweils zugeordneten Zylinderkammer 3, 2, 3', 2' und somit die Maximalgeschwindigkeit der Kolbenstange der Pendelzylinder 1, 1' bei Leitungsbruch einzustellen. Hierdurch kann gewährleistet werden, dass im Falle eines Leitungsbruches hinreichend Zeit zur Verfügung steht, um die Absperrventile 5 der Sicherungseinrichtungen 11, 11', 11", 11"' zu betätigen.

Das Stromregelventil 6 jeder Sicherungseinrichtung 11, 11', 11'', 11''' ist von einer Bypassleitung 61 umgeben, in der ein Rückschlagventil 62 angeordnet ist. Dieses Rückschlagventil 62 lässt eine Fluidströmung zu, die von den mittleren Leitungsbereichen 52 zum jeweils zugeordneten nächstgelegenen Pendelzylinder 1, 1' hin gerichtet ist.

Die Sicherungseinrichtungen 11, 11', 11", 11"' weisen jeweils ein gemeinsames Gehäuse 44 auf, in dem das jeweilige Absperrventil 5, das jeweilige Druckbegrenzungsventil 4, das jeweilige Stromregelventil 6, die jeweilige Bypassleitung 61 und das jeweilige Rückschlagventil 62 angeordnet sind.

Zum aktiven Pendeln ist die Pendeleinrichtung der Fig. 1 mit einer Fördereinrichtung 30 versehen. Die Fördereinrichtung 30 ist über eine erste Betriebsleitung 31, welche in die beiden ersten Hydraulikleitungen 21, 21' der Kolbenbodenkammern 3, 3' einmündet, und eine zweite Betriebsleitung 32, die in die zweiten Hydraulikleitungen 22, 22' der Ringflächenkammern 2, 2' einmündet, mit den Hydraulikleitungen 21, 21', 22, 22' verbunden. Die Einmündungspunkte liegen dabei in den fest mit dem Chassis 80 verbundenen Leitungsbereichen 52.

Die Fördereinrichtung 30 weist eine Pumpe 34 auf, die über ein Wegeventil 39 wechselweise mit der ersten Betriebsleitung 31 oder der zweiten Betriebsleitung 32 in Verbindung gebracht werden kann, wobei die jeweils andere Betriebsleitung 32 beziehungsweise 31 über das Wegeventil 39 mit einer Ablaufleitung 36 der Fördereinrichtung 30 verbunden ist. Hierdurch können die beiden Pendelzylinder 1, 1' zum aktiven Pendeln gleichgerichtet ausgefahren beziehungsweise eingefahren werden.

Beispielsweise kann durch geeignetes Einstellen des Wegeventils 39 Öl von der Pumpe 34 in die Betriebsleitung 31 gefördert werden, von wo es in die Kolbenbodenkammern 3, 3' gelangt. In den Ringflächenkammern 2, 2' wird daraufhin Öl verdrängt, welches über die Leitung 32 in die Ablaufleitung 36 und zurück in den Tank gelangt. Hierbei werden die beiden Pendelzylinder 1, 1' simultan ausgefahren. Die Schaltstellung des Wegeventils 39 gibt an, ob die Pendelzylinder 1, 1' gleichgerichtet ein- oder ausfahren und welche der Leitungen 31 oder 32 den Vorlauf oder den Rücklauf darstellt.

Um das System der beiden Pendelzylinder 1, 1' beim passiven Pendeln in sich geschlossen zu halten, ist an den Betriebsleitungen 31, 32 eine Lasthalteeinrichtung 7 vorgesehen, die für jede Betriebsleitung 31, 32 ein Lasthalteventil aufweist. Mittels dieser Lasthalteeinrichtung 7 können die Hydraulikleitungen 21, 21', 22, 22' von der äußeren Ölversorgung, insbesondere von der Pumpe 34 und der Ablaufleitung 36, entkoppelt werden.

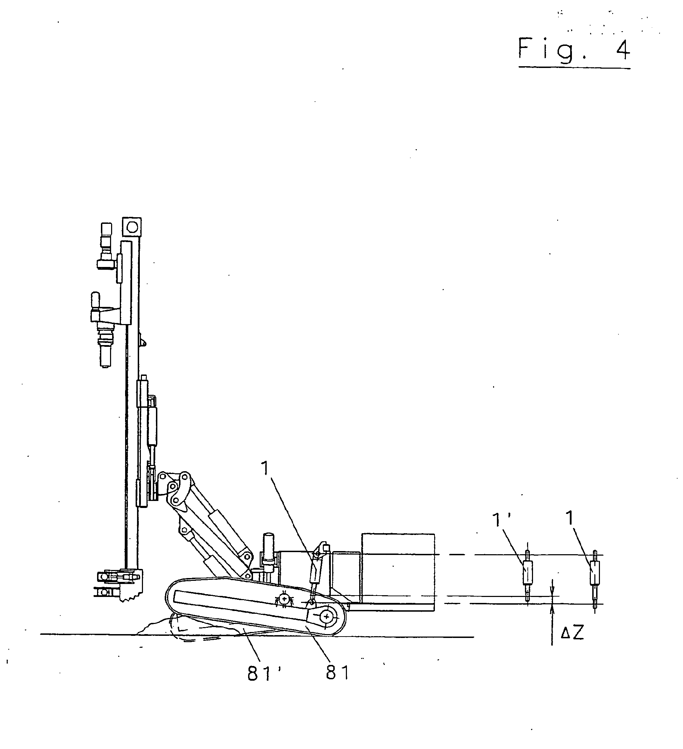

Fig. 2 zeigt ein Bohrgerät 90, das ein Fahrgestell mit einer Pendeleinrichtung aus Fig. 1 aufweist. Das Bohrgerät 90 weist ein Chassis 80 auf, an dem ein Mastelement 79 mit einem Bohrantrieb angeordnet ist. Zum horizontalen Bewegen des Chassis 80 sind an diesem zwei als Raupenfahrschiffe ausgebildete Fahrschiffe 81, 81' angeordnet, wobei das zweite Fahrschiff 81' in Fig. 2 durch das erste Fahrschiff 81 verdeckt ist und nur in Fig. 4 erkennbar ist.

Die beiden Fahrschiffe 81, 81' sind um eine quer zur Fahrtrichtung der Fahrschiffe 81, 81' verlaufende Schwenkachse 78 schwenkbar am Chassis 80 gelagert. Zum aktiven Verschwenken der beiden Fahrschiffe 81, 81' um die Schwenkachse 78 und somit zum Durchführen einer Pendelbewegung ist an den Fahrschiffen 81, 81' jeweils einer der beiden Pendelzylinder 1, 1' angelenkt, wobei die Pendelzylinder 1, 1' an ihrer entgegengesetzten Seite am Chassis 80 angelenkt sind.

Die Funktionsweise der Pendeleinrichtung der Fig. 1 und der hieran vorgesehenen Sicherungseinrichtungen 11, 11', 11 ", 11''' wird nachfolgend unter Bezugnahme auf verschiedene Betriebsmodi des Bohrgerätes 90 und seines Fahrgestelles beschrieben.

### Schlauchbruch bei stillstehendem Fahrwerk

Bei abgestellter Maschine sind die Absperrventile 5 der Sicherungseinrichtungen 11, 11', 11", 11"' steuerenergielos, insbesondere stromlos, und somit geschlossen. Ein Bruch eines oder mehrerer der flexiblen Schlauchabschnitte 24, 24', 24", 24'" hat somit keine Auswirkungen auf die Pendelzylinder 1, 1' und das Bohrgerät 90 bleibt stehen.

### Schlauchbruch beim Fahren ohne Pendeln

Wird der Taster 8 beim Fahren des Fahrwerkes nicht betätigt, sind die Absperrventile 5. energielos und geschlossen, so dass die beiden Pendelzylinder 1, 1' hydraulisch getrennt sind. Wie beim stehenden Fahrwerk verhindern die geschlossenen Absperrventile 5 bei einem Schlauchbruch in einem oder mehreren der flexiblen Schlauchabschnitte 24, 24', 24", 24'" eine unkontrollierte Bewegung des Gerätes.

### Auffahren auf ein Hindernis mit dem linken Fahrwerk beim passiven Pendeln

Wird der Taster 8 beim Verfahren des Bohrgerätes 90 betätigt, öffnen sich die Absperrventile 5 und die Pendelzylinder 1, 1' werden gegeneinander freigeschaltet. Die Druckverhältnisse in den beiden Pendelzylindern 1, 1' können sich somit über die Leitungen 21, 21', 22, 22' ausgleichen, was eine Geländeanpassung des Gerätes 90 ermöglicht. Die Lasthalteeinrichtung 7 hält das hydraulische System dabei in sich geschlossen.

Fährt das Bohrgerät, wie in Fig. 4 dargestellt, beispielsweise mit dem linken Fahrwerk auf ein Hindernis, dann wird die Kolbenstange des linken Pendelzylinders 1 herausgezogen. Das hierbei verdrängte Volumen aus der Ringflächenkammer 2 des linken Pendelzylinders 1 gelangt in die Ringflächenkammer des rechten Pendelzylinders 1' und lässt diesen um das gleiche Maß einfahren, bis in den beiden Zylindern 1,1' wieder die gleichen Druckverhältnisse herrschen. Die beiden Pendelzylinder 1,1' weisen aufgrund des Fluidaustausches zwischen den Zylindern 1,1' um ΔZ unterschiedliche Ausfahrlängen auf. Wird in dieser Position der Taster 8 losgelassen, so schließen die Absperrventile 5, was bewirkt, dass das Fahrwerk in der Position arretiert wird.

### Schlauchbruch beim Fahren und gleichzeitigen passiven Pendeln

Bricht beim passiven Pendeln mit geöffneten Absperrventilen 5 einer oder mehrere der flexiblen Schlauchabschnitte 24, 24', 24", 24"', so wird ein Kippen des Gerätes durch das jeweilige Stromregelventil 6 so weit verlangsamt, dass der Maschinenbediener genügend Zeit hat, den Taster 8 zu lösen, so dass die Absperrventile 5 schließen und das Pendelfahrwerk sofort stillgesetzt wird. Alternativ kann die Bewegung des Pendelfahrwerks durch Betätigen des Notaus-Schalters 55 gestoppt werden, was ebenfalls ein Schließen der Absperrventile 5 zur Folge hat.

### Schlauchbruch beim aktiven Pendeln

Zum aktiven Pendeln, um also beide Pendelzylinder 1, 1' gleichgerichtet entweder aus- oder einfahren zu können, wird zunächst der Taster 8 betätigt. Die vier Absperrventile 5 werden hierdurch geöffnet. Daraufhin gleicht zunächst die passive Pendelautomatik Unebenheiten des Geländes an den Fahrschiffen 81, 81' aus. Das Ausgleichen erfolgt nicht schlagartig, sondern wird, wie auch beim passiven Pendeln, über die Stromregelventile 6 gebremst.

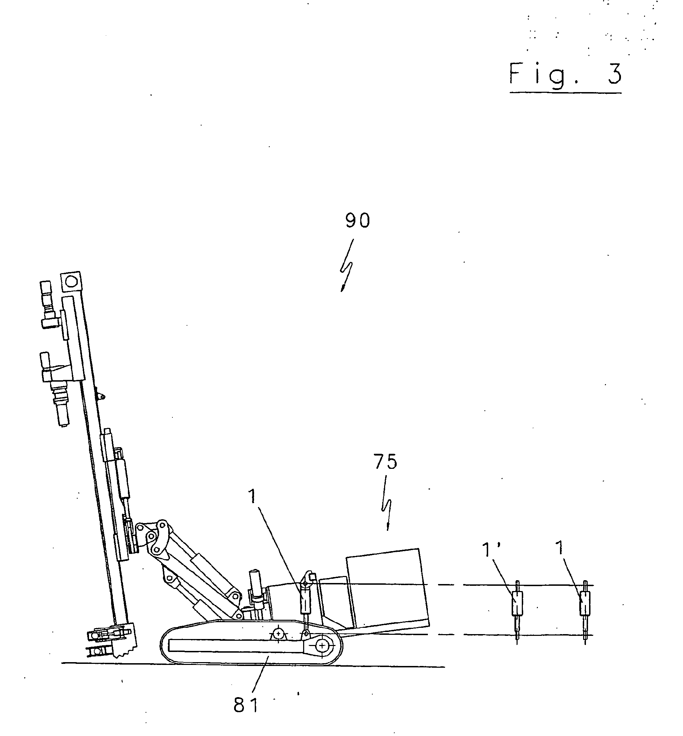

Im zweiten Schritt wird das in Fig. 1 dargestellte Wegeventil 39 betätigt, so dass beispielsweise Öl von der Pumpe 34 in die Kolbenbodenkammern 3, 3' zugeleitet wird und gleichzeitig Öl aus den Ringflächenkammern 2, 2' abgeführt wird. Hierdurch fahren die beiden Pendelzylinder 1, 1' wie in Fig. 3 dargestellt gleichgerichtet aus, wodurch das Heck 75 des Bohrgerätes 90 gegenüber dem Boden angehoben wird; bei umgekehrter Schaltstellung des Wegeventils 39 fahren die Pendelzylinder 1, 1' gleichgerichtet ein und das Heck 75 wird abgesenkt.

Bricht nun ein flexibler Schlauchabschnitt 24, 24', 24", 24"', so wird ein Abkippen des Gerätes 90 durch das jeweilige Stromregelventil 6 so weit verlangsamt, dass der Maschinenbediener den Taster 8 wieder lösen kann. Hierdurch wird die unerwünschte Bewegung sofort stillgesetzt. Alternativ kann die Bewegung der Maschine auch durch Betätigen des Notaus-Schalters 9 gestoppt werden.

## Patentansprüche

1. Pendelfahrwerk, insbesondere für ein Bohrgerät, mit
- einem Chassis (80),
- zwei Fahrschiffen (81, 81'), die seitlich am Chassis (80) angeordnet und verschwenkbar gelagert sind,
- zwei Pendelzylindern (1, 1') zum Verschwenken der Fahrschiffe (81, 81') relativ zum Chassis (80), wobei jedem Fahrschiff (81, 81') ein Pendelzylinder (1, 1') zugeordnet ist, und
- Hydraulikleitungen (21, 22; 21', 22'), die zum Betätigen der Pendelzylinder (1, 1') an den Pendelzylindern (1, 1') angeordnet sind, wobei die Hydraulikleitungen (21, 22; 21', 22') für ein gegensinniges Verschwenken der Fahrschiffe (81, 81') miteinander verbunden sind,
- wobei an zumindest einer Hydraulikleitung (21, 22; 21', 22') für jeden Pendelzylinder (1, 1') eine Sicherungseinrichtung (11) zur Leitungsbruchsicherung vorgesehen ist,
- wobei jede Sicherungseinrichtung (11) zumindest ein fernbetätigbares Absperrventil (5) zum Absperren der jeweiligen Hydraulikleitung (21, 22; 21', 22') bei einem Leitungsbruch aufweist, welches an der Hydraulikleitung (21, 22; 21', 22') angeordnet ist, und
- wobei eine Fernbetätigungseinrichtung zum gleichzeitigen Öffnen der Absperrventile (5) bei Normalbetrieb vorgesehen ist,
**dadurch gekennzeichnet,**
**dass** die Fernbetätigungseinrichtung mit den Absperrventilen (5) elektronisch in Signalverbindung steht, und
**dass** die Absperrventile (5) elektrisch entsperrbar sind.

2. Fahrwerk nach Anspruch 1,
**dadurch gekennzeichnet,**
**dass** zumindest eine der Hydraulikleitungen (21, 22; 21', 22') zumindest einen flexiblen Schlauchabschnitt (24) aufweist und
**dass** die Sicherungseinrichtung (11) zwischen dem jeweiligen Pendelzylinder (1, 1') und dem Schlauchabschnitt (24) angeordnet ist.

3. Fahrwerk nach einem der vorstehenden Ansprüche,
**dadurch gekennzeichnet,**
- **dass** die Fernbetätigungseinrichtung einen Taster (8), insbesondere einen Fußtaster aufweist,
- wobei die Fernbetätigungseinrichtung vorzugsweise so ausgebildet ist, dass die Absperrventile (5) bei freigegebenem Taster (8) schließen.

4. Fahrwerk nach einem der vorstehenden Ansprüche,
**dadurch gekennzeichnet,**
**dass** das Absperrventil (5) so ausgebildet ist, dass es im signalfreien Zustand geschlossen ist.

5. Fahrwerk nach einem der vorstehenden Ansprüche,
**dadurch gekennzeichnet,**
**dass** zumindest eine der Sicherungseinrichtungen (11) eine Drosseleinrichtung, insbesondere ein Stromregelventil (6) aufweist, die zum Begrenzen einer Hydraulikfluidströmung aus dem jeweiligen Pendelzylinder (1, 1') an der jeweiligen Hydraulikleitung (21, 22; 21', 22') angeordnet ist.

6. Fahrwerk nach einem der vorstehenden Ansprüche,
**dadurch gekennzeichnet,**
**dass** zumindest eine der Sicherungseinrichtungen (11) zum Überlastschutz des jeweiligen Pendelzylinders (1, 1') ein Druckbegrenzungsventil (4) aufweist, das an einer Überlastleitung (9) angeordnet ist, die von der jeweiligen Hydraulikleitung (21, 22; 21', 22') abzweigt.

7. Fahrwerk nach einem der vorstehenden Ansprüche,
**dadurch gekennzeichnet,**
**dass** die Pendelzylinder (1, 1') als doppeltwirkende Zylinder ausgebildet sind, an denen jeweils zwei Hydraulikleitungen (21, 22; 21', 22') angeordnet sind, und
**dass** die Hydraulikleitungen (21, 22; 21', 22') für ein gegensinniges Verschwenken der Fahrschiffe (81, 81') paarweise miteinander verbunden sind.

8. Fahrwerk nach einem der vorstehenden Ansprüche,
**dadurch gekennzeichnet,**
- **dass** eine Fördereinrichtung (30) vorgesehen ist, die mit den Hydraulikleitungen (21, 22; 21', 22') in Verbindung steht und mit der zum gleichsinnigen Verschwenken der Fahrschiffe (81, 81') Hydraulikfluid zu den Pendelzylindern (1, 1') zuführbar und/oder von diesen abführbar ist, und
- **dass** bevorzugt eine Lasthalteeinrichtung (7) zum Trennen einer Fluidverbindung zwischen der Fördereinrichtung (30) und den Hydraulikleitungen (21, 22; 21', 22') vorgesehen ist.

9. Fahrwerk nach einem der vorstehenden Ansprüche,
**dadurch gekennzeichnet,**
- **dass** die Sicherungseinrichtungen (11) am jeweiligen Pendelzylinder (1, 1') fest angeordnet sind, und/oder
- **dass** die Sicherungseinrichtungen (11) jeweils ein Gehäuse (44) aufweisen, in dem das Absperrventil (5), gegebenenfalls das Druckbegrenzungsventil (4) und/oder gegebenenfalls die Drosseleinrichtung angeordnet sind.

10. Baumaschine, insbesondere Erdbohrgerät,
**dadurch gekennzeichnet,**
**dass** ein Fahrwerk nach einem der vorstehenden Ansprüche vorgesehen ist.

## Claims

1. Oscillating undercarriage, particularly for a drilling device, comprising
- a chassis (80),
- two undercarriage units (81, 81') which are arranged laterally on the chassis (80) and supported in a pivotable manner,
- two oscillating cylinders (1, 1') for pivoting the undercarriage units (81, 81') relative to the chassis (80), with an oscillating cylinder (1, 1') being assigned to each undercarriage unit (81, 81'), and
- hydraulic lines (21, 22; 21', 22') which are arranged on the oscillating cylinders (1, 1') for actuation of the oscillating cylinders (1, 1'), wherein the hydraulic lines (21, 22; 21', 22') are connected to one another for pivoting the undercarriage units (81, 81') in opposite directions,
- wherein a safety device (11) for line breakage safety is provided on at least one hydraulic line (21, 22; 21', 22') for each oscillating cylinder (1, 1'),
- with each safety device (11) having at least one remote-controlled stop valve (5) for blocking the respective hydraulic line (21, 22; 21', 22') in the case of line breakage, which is arranged on the hydraulic line (21, 22; 21', 22') and
- wherein a remote-control device is provided for opening the stop valves (5) simultaneously during normal operation,
**characterized in that**
- the remote-control device is in electronic signal connection with the stop valves (5) and
- **in that** the stop valves (5) can be unblocked electrically.

2. Undercarriage according to claim 1,
**characterized in that**
- at least one of the hydraulic lines (21, 22; 21', 22') has at least one flexible hose portion (24) and
- **in that** the safety device (11) is arranged between the respective oscillating cylinder (1, 1') and the hose portion (24).

3. Undercarriage according to any one of the preceding claims,
**characterized in that**
- the remote-control device has a pushbutton (8), in particular a foot switch,
- the remote-control device being preferably designed such that the stop valves (5) close when the pushbutton (8) is released.

4. Undercarriage according to any one of the preceding claims,
**characterized in that**
the stop valve (5) is designed such that it is closed in signal-free state.

5. Undercarriage according to any one of the preceding claims,
**characterized in that**
at least one of the safety devices (11) has a throttle device, in particular a flow-regulating valve (6), which is arranged on the respective hydraulic line (21, 22; 21', 22') in order to limit a flow of hydraulic fluid from the respective oscillating cylinder (1, 1').

6. Undercarriage according to any one of the preceding claims,
**characterized in that**
for overload protection of the respective oscillating cylinder (1, 1') at least one of the safety devices (11) has a pressure-limiting valve (4) arranged on an overload line (9) which branches off from the respective hydraulic line (21, 22; 21', 22').

7. Undercarriage according to any one of the preceding claims,
**characterized in that**
- the oscillating cylinders (1, 1') are designed as double-acting cylinders, on each of which two hydraulic lines (21, 22; 21', 22') are arranged and
- **in that** the hydraulic lines (21, 22; 21', 22') are connected to each other in pairs in order to pivot the undercarriage units (81, 81') in opposite directions.

8. Undercarriage according to any one of the preceding claims,
**characterized in that**
- a conveyor device (30) is provided, which is connected to the hydraulic lines (21, 22; 21', 22') and by means of which hydraulic fluid can be supplied to and/or discharged from the oscillating cylinders (1, 1') in order to pivot the undercarriage units (81, 81') in the same direction and
- **in that** a load-holding device (7) is preferably provided for cutting a fluid connection between the conveyor device (30) and the hydraulic lines (21, 22; 21', 22').

9. Undercarriage according to any one of the preceding claims,
**characterized in that**
- the safety devices (11) are arranged in a fixed manner on the respective oscillating cylinder (1, 1') and/or
- **in that** the safety devices (11) each have a housing (44), in which the stop valve (5), possibly the pressure-limiting valve (4) and/or possibly the throttle device are arranged.

10. Construction machine, in particular an earth drilling device,
**characterized in that**
an undercarriage according to any one of the preceding claims is provided.

## Revendications

1. Châssis roulant oscillant, en particulier pour un engin de forage, avec
- un châssis (80),
- deux trains de roulement (81, 81') qui sont placés latéralement sur le châssis (80) et sont montés pivotants,
- deux vérins oscillants (1, 1') pour faire pivoter les trains de roulement (81, 81') par rapport au châssis (80), un vérin oscillant (1, 1') étant associé à chaque train de roulement (81, 81'), et
- des conduites hydrauliques (21, 22 ; 21', 22') qui sont placées sur les vérins oscillants (1, 1') pour actionner les vérins oscillants (1, 1'), les conduites hydrauliques (21, 22 ; 21', 22') étant reliées entre elles pour un pivotement en sens inverse des trains de roulement (81, 81'),
- un dispositif de sécurité (11) étant prévu sur au moins une conduite hydraulique (21, 22 ; 21', 22') pour chaque vérin oscillant (1, 1') comme sécurité contre une rupture de conduite,
- chaque dispositif de sécurité (11) présentant au moins une vanne de commande (5) actionnable à distance pour fermer la conduite hydraulique (21, 22 ; 21', 22') correspondante en cas de rupture de conduite, vanne qui est placée sur la conduite hydraulique (21, 22 ; 21', 22'), et
- un dispositif de commande à distance étant prévu pour ouvrir simultanément les vannes de fermeture (5) en service normal,
***caractérisé***
***en ce que*** le dispositif de commande à distance est en liaison de signal électronique avec les vannes de fermeture (5), et
***en* ce *que*** les vannes de fermeture (5) peuvent être déverrouillées électriquement.

2. Châssis roulant selon la revendication 1, ***caractérisé***
***en ce qu*'**au moins l'une des conduites hydrauliques (21, 22 ; 21', 22') comprend au moins une section de tuyau souple (24) et
***en ce que*** le dispositif de sécurité (11) est placé entre le vérin oscillant (1, 1') respectif et la section de tuyau (24).

3. Châssis roulant selon l'une quelconque des revendications précédentes,
***caractérisé***
- ***en ce que*** le dispositif de commande à distance comprend un contacteur (8), en particulier un contacteur à pied,
- le dispositif de commande à distance étant de préférence conformé de telle sorte que les vannes de fermeture (5) se ferment quand le contacteur (8) est relâché.

4. Châssis roulant selon l'une quelconque des revendications précédentes, ***caractérisé en ce que*** la vanne de fermeture (5) est conformée de telle sorte qu'elle soit fermée dans l'état sans signal.

5. Châssis roulant selon l'une quelconque des revendications précédentes, ***caractérisé en ce qu*'**au moins l'un des dispositifs de sécurité (11) comprend un dispositif d'étranglement, en particulier une vanne de régulation de débit (6), qui est placé sur la conduite hydraulique (21, 22 ; 21', 22') correspondante pour limiter un écoulement de fluide hydraulique depuis le vérin oscillant (1, 1') correspondant.

6. Châssis roulant selon l'une quelconque des revendications précédentes, ***caractérisé en ce qu*'**au moins l'un des dispositifs de sécurité (11) comprend, comme protection contre les surcharges du vérin oscillant (1, 1') correspondant, une vanne de limitation de pression (4) qui est placée sur une conduite de surcharge (9) qui part de la conduite hydraulique (21, 22 ; 21', 22') correspondante.

7. Châssis roulant selon l'une quelconque des revendications précédentes,
***caractérisé***
***en ce que*** les vérins oscillants (1, 1') sont conformés en vérins à double action, sur lesquels sont placées deux conduites hydrauliques (21, 22 ; 21', 22'), et
***en ce que*** les conduites hydrauliques (21, 22 ; 21', 22') sont reliées par paires pour un pivotement en sens inverse des trains de roulement (81, 81').

8. Châssis roulant selon l'une quelconque des revendications précédentes,
***caractérisé***
- ***en ce qu***'il est prévu un dispositif de transport (30) qui communique avec les conduites hydrauliques (21, 22 ; 21', 22') et avec lequel du fluide hydraulique peut être envoyé aux vérins oscillants (1, 1') ou extraits de ceux-ci pour un pivotement en sens inverse des trains de roulement (81, 81'), et
- ***en ce que***, de manière préférée, un dispositif (7) de maintien de charge est prévu pour couper une liaison de fluide entre le dispositif de transport (30) et les conduites hydrauliques (21, 22 ; 21', 22').

9. Châssis roulant selon l'une quelconque des revendications précédentes,
***caractérisé***
- ***en ce que*** les dispositifs de sécurité (11) sont placés fixes sur le vérin oscillant (1, 1') correspondant, et/ou
- ***en ce que*** les dispositifs de sécurité (11) comprennent chacun un boîtier (44) dans lequel sont placés la vanne de fermeture (5), le cas échéant la vanne de limitation de pression (4) et/ou le cas échéant le dispositif d'étranglement.

10. Engin de chantier, en particulier engin de forage des sols, ***caractérisé en ce qu*'**un châssis roulant selon l'une quelconque des revendications précédentes est prévu.
